# EUROPÄISCHE PATENTANMELDUNG

(11) **EP 2 221 166 A2**
(43) Veröffentlichungstag der Anmeldung: **25.08.2010**
(21) Anmeldenummer: 10151788.6
(22) Anmeldetag: 27.01.2010
(51) Int. Cl.: B29C 67/00

(54) **Rapid-Prototyping-Vorrichtung und -Verfahren mit indirekter Laserbestrahlung**

(30) Priorität: 18.02.2009 DE 102009009503
(71) Anmelder: Siemens Medical Instruments Pte. Ltd., Singapore 139959 (SG)
(72) Erfinder: Chua, Tze Peng, 510139, Singapore (SG); Klemenz, Harald, 90766, Fürth (DE); Lim, Eng Cheong, 120408, Singapore (SG); Lim, Pei Chyi Kristy, 600307, Singapore (SG); Ma, Nisha Shakila, 520929, Singapore (SG); Jorgas, Matthias, 90469, Nürnberg (DE)
(74) Vertreter: Maier, Daniel Oliver

(57) **Zusammenfassung**

Die Herstellung von Werkstücken, die zum Teil mit einem Rapid-Prototyping-Verfahren hergestellt werden, soll weiter automatisiert werden können. Hierzu wird eine Vorrichtung mit einem Laser (1) zum Erzeugen eines Laserstrahls (2) für ein Aushärten eines Werkstoffs und einem Werkstückträger (4), der durch den Laser (1) direkt bestrahlbar ist, vorgesehen. Darüber hinaus weist die Vorrichtung eine Optikeinrichtung (10) auf, mit der der Laserstrahl (2) umgelenkt wird, so dass der Werkstückträger (4) mit dem Laser (1) auch indirekt bestrahlbar ist. Dadurch kann leichter auch in Hinterschneidungen von Werkstückrohlingen (3) Material aufgebracht werden.

## Beschreibung

Die vorliegende Erfindung betrifft eine Vorrichtung zum Herstellen eines Werkstücks gemäß einem Rapid-Prototyping-Verfahren mit einem Laser zum Erzeugen eines Laserstrahls für ein Aushärten eines Werkstoffs und einem Werkstückträger, der durch den Laser aus einem vorgegebenen Raumwinkelbereich direkt bestrahlbar ist. Darüber hinaus betrifft die vorliegende Erfindung ein Rapid-Prototyping-Verfahren zum Herstellen eines Werkstücks durch Erzeugen eines Laserstrahls, Bereitstellen eines Werkstückträgers, der durch den Laserstrahl aus einem vorgegebenen Raumwinkelbereich direkt bestrahlbar ist, und Aushärten eines Werkstoffs auf dem Werkstückträger mit dem Laserstrahl.

Unter dem Begriff "Rapid-Prototyping" (schneller Prototypaufbau) versteht man ein Verfahren zum schnellen Herstellen von Musterbauteilen ausgehend von Konstruktionsdaten. Insbesondere kann dabei auf den Einsatz aufwändig herzustellender Formen wie etwa beim Spritzguss verzichtet werden. Typische Rapid-Prototyping-Verfahren sind die Stereolithografie (STL oder SLA) und das selektive Lasersintern (SLS).

Die Stereolithografie ist ein Verfahren, bei dem ein Werkstück durch materialisierende Punkte schichtweise aufgebaut wird. Die Fertigung eines Teils oder mehrerer Teile erfolgt typischerweise vollautomatisch aus am Computer erstellten CAD-Daten. Dabei wird ein lichtaushärtender Kunststoff, z. B. Epoxidharz, von einem Laser in dünnen Schichten ausgehärtet.

Das selektive Lasersintern hingegen ist ein Verfahren, bei dem räumliche Strukturen durch Sintern aus einem pulverförmigen Ausgangsstoff hergestellt werden. Es handelt sich ebenfalls um ein generatives Schichtbauverfahren. Durch die Wirkung der Laserstrahlen können so beliebige dreidimensionale Geometrien auch mit Hinterschneidungen erzeugt werden, die sich beispielsweise mit konventioneller Gusstechnik nicht herstellen lassen. Als Werkstoffe werden insbesondere Thermoplaste wie beispielsweise Polycarbonate, Polyamide, Polyvinylchlorid aber auch Metalle verwendet.

Falls ein Werkstückrohling bereits vor dem Materialaufbau mit einem Rapid-Prototyping-Verfahren eine Komponente trägt, unter der sich - bezogen auf die Bestrahlung mit dem Laser - ein hohler Raum befindet, in welchen der Laser nicht direkt eindringen kann, so kann in diesem Hohlraum durch das Rapid-Prototyping-Verfahren kein Material aufgebaut werden. In solchen Fällen ist es notwendig, dass der Werkstückrohling zunächst ohne diese Komponente bereitgestellt wird, anschließend das Material mit dem Rapid-Prototyping-Verfahren aufgebaut wird und schließlich die Komponente - in der Regel manuell - auf das endgültige Rapid-Prototyping-Werkstück aufgebracht wird. Dadurch muss unter Umständen auf einen automatischen Bestückungsprozess bzw. -schritt verzichtet werden, mit dem sonst die Komponente auf das Werkstück bzw. dem Werkstückrohling aufgebracht wird.

Die Aufgabe der vorliegenden Erfindung besteht somit darin, die Herstellung von Werkstücken, bei der ein Rapid-Prototyping-Verfahren Teil des Herstellungsprozesses ist, weiter automatisieren zu können.

Erfindungsgemäß wird diese Aufgabe gelöst durch eine Vorrichtung zum Herstellen eines Werkstücks gemäß einem Rapid-Prototyping-Verfahren mit
- einem Laser zum Erzeugen eines Laserstrahls für ein Aushärten eines Werkstoffs und
- einem Werkstückträger, der durch den Laser direkt bestrahlbar ist,
sowie
- einer Optikeinrichtung, mit der der Laserstrahl umgelenkt wird, so dass der Werkstückträger mit dem Laser auch indirekt bestrahlbar ist.

Darüber hinaus wird erfindungsgemäß bereitgestellt ein Rapid-Prototyping-Verfahren zum Herstellen eines Werkstücks durch
- Erzeugen eines Laserstrahls,
- Bereitstellen eines Werkstückträgers, der durch den Laserstrahl direkt bestrahlbar ist, und
- Aushärten eines Werkstoffs auf dem Werkstückträger mit dem Laserstrahl,
sowie
- Umlenken eines Laserstrahls, so dass der Werkstückträger mit dem Laserstrahl indirekt bestrahlt wird.

In vorteilhafter Weise ist es so möglich, beispielsweise einen automatisch hergestellten Werkstückrohling mit Hinterschneidungen auch nachträglich einem Rapid-Prototyping-Verfahren zu unterziehen, bei dem in der Hinterschneidung Material aufgebaut wird. Dies kann dadurch erreicht werden, dass der Laserstrahl auch indirekt über die Optikeinrichtung zu dem Werkstück gelenkt wird.

Vorzugsweise umfasst die Optikeinrichtung einen Spiegel. Mit einem Spiegel lässt sich ein Laserstrahl stark umlenken, so dass auch entlegene Hohlräume eines Werkstückrohlings durch den Laserstrahl erreicht werden können.

In einer speziellen Ausführungsform ist das Rapid-Prototyping-Verfahren ein Stereolithografieverfahren. Damit lässt sich ein Werkstück durch Laserhärten aus einem flüssigen Duromer herstellen.

Alternativ kann das Rapid-Prototyping-Verfahren auch ein selektives Lasersintern sein. In diesem Fall lässt sich das Werkstück beispielsweise aus Thermoplasten oder aus einem Metall herstellen.

Gemäß einer weiteren Ausführungsform kann der Werkstückträger einen Werkstückrohling mit einer Komponente tragen, unter der sich (bezogen auf den Laser) ein Hohlraum befindet, in dem durch indirekte Bestrahlung mit dem Laser Material durch Aushärten des Werkstoffs aufgebaut wird. Damit kann die Möglichkeit eingeräumt werden, den Werkstückrohling ohne das später durch das Rapid-Prototyping-Verfahren aufgebaute Material zunächst automatisch mit der Komponente zu bestücken. Die Komponente muss also nicht nach dem Rapid-Prototyping-Verfahren von Hand aufgebracht werden, wenn dies vorab automatisch geschehen kann. So können Standardbauteile weiter automatisch vervollständigt werden, bevor sie einer Individualisierung durch das Rapid-Prototyping unterzogen werden.

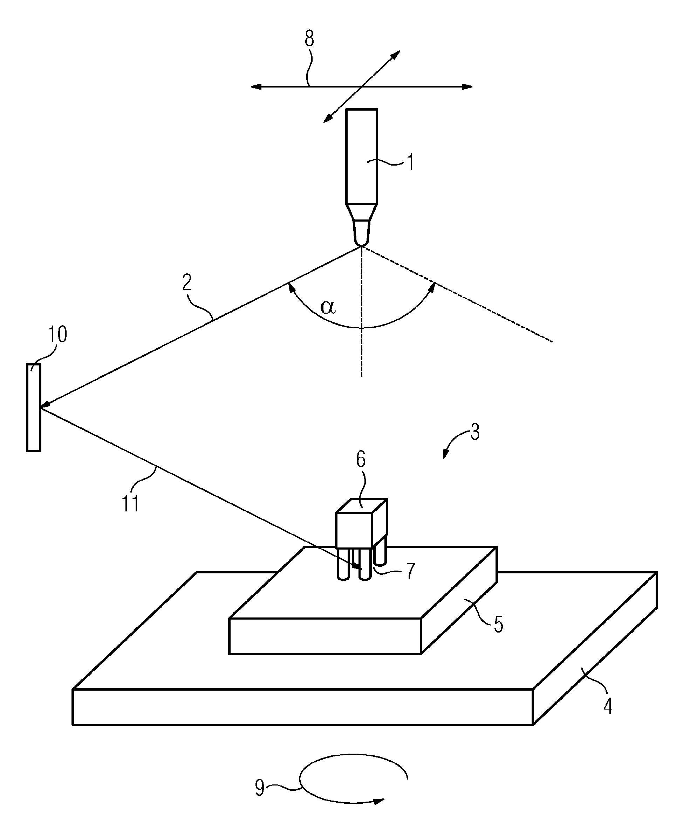

Die vorliegende Erfindung wird anhand der beigefügten Zeichnung näher erläutert, die eine Prinzipskizze einer erfindungsgemäßen Rapid-Prototyping-Vorrichtung darstellt.

Die nachfolgend näher geschilderten Ausführungsbeispiele stellen bevorzugte Ausführungsformen der vorliegenden Erfindung dar.

Das nachfolgende Ausführungsbeispiel bezieht sich wie die gesamte Erfindung auf ein Rapid-Prototyping-Verfahren, bei dem ein Laser zum Aushärten bzw. Auftragen von Material verwendet wird. Insbesondere soll auch auf einen Werkstückrohling, der Hinterschneidungen besitzt, individuell in einem raschen Prozess Material aufgetragen werden können.

Eine hierzu geeignete Rapid-Prototyping-Vorrichtung ist in der Fig. schematisch dargestellt. Es sind lediglich die wesentlichen Komponenten wiedergegeben. Diese sind zunächst ein Laser 1, der zum Erzeugen eines Laserstrahls 2 dient. Bestrahlt werden soll ein Werkstückrohling 3, der sich auf einem Werkstückträger 4 befindet. Der Werkstückrohling 3 ist hier durch eine Platte 5 und eine darauf montierte Komponente 6 symbolisiert. Bezogen auf die "Blickrichtung" des Lasers 1 befindet sich unterhalb der Komponente 6 ein Hohlraum 7, da die Komponente 6 hier auf Stützen auf die Platte 5 montiert ist.

Bei einigen Rapid-Prototyping-Geräten ist der Laser in einer Ebene oberhalb des Werkstückträgers 4 in gewissen Grenzen gemäß den Pfeilen 8 relativ zu dem Werkstück bzw. Werkstückträger 4 verschiebbar. Ferner ist der Laser oft in einem vorgegebenen räumlichen Winkelbereich (hier symbolisiert durch den Winkel α) schwenkbar. Außerdem lässt sich gegebenenfalls auch der Werkstückträger 4 um seine Achse gemäß Pfeil 9 drehen. Mit diesen Freiheitsgraden des Lasers 1 relativ zu dem Werkstück bzw. Werkstückträger 4 können hier aber nicht die Hinterschneidungen des Werkstückrohlings 3 durch ein Rapid-Prototyping-Verfahren mit Material gefüllt werden. Es würden hier also Hinterschneidungen vorliegen, die stets im Schattenbereich des Lasers 1 liegen.

Erfindungsgemäß ist daher vorgesehen, den Laserstrahl 2 mit Hilfe eines Spiegels 10 umzulenken und das Werkstück bzw. den Werkstückrohling 3 so indirekt mit dem Laserlicht zu bestrahlen. Es ist ohne Weiteres zu erkennen, dass der umgelenkte Laserstrahl 11 sehr viel weiter unter die Komponente 6 eindringen kann als der direkte Laserstrahl 2, der unmittelbar von dem in seinen Bewegungen beschränkte Laser 1 stammt. Wenn der Laser den Werkstückträger demnach ohne den Spiegel 10 nur aus einem vorgegebenen Raumwinkelbereich direkt bestrahlen kann, kann er das Werkstück bzw. den Werkstückträger 4 mit Hilfe des Spiegels 10 (sofern dieser geeignet platziert ist) auch aus einem Zusatzwinkelbereich bestrahlen, der außerhalb des vorgegebenen Raumwinkelbereichs liegt. Die indirekte Bestrahlung vergrößert somit den Einfallsbereich des Laserstrahls auf das Werkstück.

Der Spiegel 10 kann durch eine beliebige andere Optikeinrichtung ersetzt werden, die den Laserstrahl umlenkt. Beispielsweise kann es sich bei der Optikeinrichtung auch um eine Anordnung von mehreren Spiegeln handeln. Außerdem kann der oder die Spiegel auch dynamisch bewegt sein. Des Weiteren kann die Optikeinrichtung auch Elemente zur Lichtbrechung, wie z. B. ein Prisma, aufweisen.

Gemäß der vorliegenden Erfindung können somit Werkstückrohlinge mit Hinterschneidungen in die Rapid-Prototyping-Vorrichtung eingelegt und verarbeitet werden, die wegen ihrer Hinterschneidungen mit konventionellen Rapid-Prototyping-Vorrichtungen nicht bearbeitet werden könnten. In dem konkreten Beispiel kann nun auch nach dem automatischen Bestücken der Platte 5 mit der Komponente 6 Material auf der Platte 5 gegebenenfalls auch unter der Komponente 6 durch ein Rapid-Prototyping-Verfahren, wie z. B. Stereolithografie oder selektives Lasersintern, aufgebracht werden. Somit braucht nicht auf das automatische Bestücken der Platte 5 mit der Komponente 6 verzichtet zu werden.

## Patentansprüche

1. Vorrichtung zum Herstellen eines Werkstücks gemäß einem Rapid-Prototyping-Verfahren mit
- einem Laser (1) zum Erzeugen eines Laserstrahls (2) für ein Aushärten eines Werkstoffs und
- einem Werkstückträger (4), der durch den Laser (1) direkt bestrahlbar ist,
**gekennzeichnet durch**
- eine Optikeinrichtung (10), mit der der Laserstrahl (2) umgelenkt wird, so dass der Werkstückträger (4) mit dem Laser auch indirekt bestrahlbar ist.

2. Vorrichtung nach Anspruch 1, wobei die Optikeinrichtung (10) einen Spiegel umfasst.

3. Vorrichtung nach Anspruch 1 oder 2, wobei das Rapid-Prototyping-Verfahren ein Stereolithografieverfahren ist.

4. Vorrichtung nach Anspruch 1 oder 2, wobei das Rapid-Prototyping-Verfahren ein selektives Lasersinterverfahren ist.

5. Rapid-Prototyping-Verfahren zum Herstellen eines Werkstücks durch
- Erzeugen eines Laserstrahls (2),
- Bereitstellen eines Werkstückträgers (4), der durch den Laserstrahl (2) direkt bestrahlbar ist, und
- Aushärten eines Werkstoffs auf dem Werkstückträger (4) mit dem Laserstrahl (2),
**gekennzeichnet durch**
- Umlenken eines Laserstrahls (2), so dass der Werkstückträger mit dem Laserstrahl indirekt bestrahlt wird.

6. Rapid-Prototyping-Verfahren nach Anspruch 5, wobei der Laserstrahl (2) mittels eines Spiegels umgelenkt wird.

7. Rapid-Prototyping-Verfahren nach Anspruch 5 oder 6, das als Stereolithografieverfahren ausgeführt wird.

8. Rapid-Prototyping-Verfahren nach Anspruch 5 oder 6, das als selektives Lasersinterverfahren ausgeführt wird.

9. Rapid-Prototyping-Verfahren einem der Ansprüche 5 bis 8, wobei der Werkstückträger (4) einen Werkstückrohling (3) mit einer Komponente (6) trägt, unter der sich ein Hohlraum (7) befindet, in dem durch indirekte Bestrahlung (11) mit dem Laser (1) Material durch Aushärten des Werkstoffs aufgebaut wird.
